# EUROPEAN PATENT APPLICATION

(11) **EP 1 932 596 A1**
(43) Date of publication of application: **18.06.2008**
(21) Application number: 06782983.8
(22) Date of filing: 24.08.2006
(51) Int. Cl.: B05B 7/16, C04B 41/65, E04F 21/12, E04G 21/02

(54) **SULFUR MATERIAL SPRAYING APPARATUS**

(30) Priority: 26.08.2005 JP 2005245823
(71) Applicant: Nippon Oil Corporation, Tokyo 105-8412 (JP)
(72) Inventor: OOTA, Yoshitaka, Muroran-shi, Hokkaido 050-0065 (JP); TSUSHIMA, Junichi, Muroran-shi, Hokkaido 050-0065 (JP)
(74) Representative: Fleuchaus, Michael A.
(86) International application number: PCT/JP2006/316579
(87) International publication number: WO 2007/023885

(57) **Abstract**

The present invention comprises: a material tank 1 which contains therein a melted sulfur material as a spraying material; a warming heater 2 which is made temperature-adjustable so as to heat an outer peripheral portion of the material tank 1 within a setting temperature range equal to or higher than sulfur melting point and to retain the sulfur material in the material tank 1 in a melted state; and a spray nozzle 3 which is integrally mounted to the material tank 1 while being connected to a material outlet port on a lower end portion of the material tank 1 and is supplied with the compressed air, to inject the sulfur material in the material tank 1 together with the compressed air, wherein the sulfur material in the melted state is sprayed on a working surface. As a result, the spraying material comprised of the sulfur material which is solid at room temperature while it is melted to become a fluid state upon being heated to a temperature within a preset temperature range of which a lower limit is set to be equal to or above a melting point of the sulfur material can be consecutively sprayed on the working surface.

## Description

### Technical Field

The present invention relates to an apparatus for spraying a spraying material on a working surface such as e.g., a concrete structure surface or the like, and in detail, relates to a sulfur material spraying apparatus capable of consecutively spraying on the working surface, as the spraying material, a sulfur material which remains solid at room temperature while it is melted to become a fluid state upon being heated to a temperature within a preset temperature range of which a lower limit is equal to or above a melting point of the sulfur material.

### Background Art

Sulfur is understood as one of materials that are solid at room temperature while it is melted to become a fluid state upon being heated to over melting point. Thus, the sulfur recently receives an attention due to the characteristics that the sulfur is solid at room temperature while melted upon being heated to about 119°C to 159°C, and it is attempted that the sulfur is utilized as a civil-engineering material and a construction material by mixing a predetermined sample or predetermined samples in it. Such a material using the sulfur is apparently similar to usual concrete employing cement in finishing and handling, and therefore, sometimes is called sulfur concrete or sulfur solidified material (refer to Patent Document 1).

The sulfur-solidified material is produced such that sand, aggregate, and coal ash and the like are mixed in melted sulfur, and the mixture is kneaded while retaining the temperature of 119°C to 159°C, and thereafter, is cooled to be hardened. Such a sulfur-solidified material has the following characteristics in comparison with the usual concrete employing cement.
(1) It is possible to obtain the compressive strength (about two times) higher than that of the usual concrete, as a result of the mixing of the melted sulfur.
(2) Since the sulfur-solidified material is chemically neutral, it is inactive to acid, and accordingly, is not dissolved in the acid. Therefore, the sulfur-solidified material can be used as a material suitable for strong acidity sites, such as hot springs or spa for example.
(3) The usual concrete needs about one to four weeks until it is hardened. However, the sulfur-solidified material is hardened in a matter of hours at room temperature.

Then, recently, it is attempted that the sulfur-solidified material is sprayed on a concrete structure surface for example, to thereby form a sulfur-solidified material coating of predetermined thickness on the concrete structure surface. In this case, it is required to prepare a spraying apparatus for spraying the sulfur-solidified material serving as a spraying material on the concrete structure surface. Here, as a conventional spraying apparatus, there has been proposed the one comprising: a tank which contains therein a spraying material; and a spray nozzle which is integrally mounted to the tank while being connected to a material outlet port on a lower end portion of the tank, and is supplied with the compressed air, to inject the spraying material in the tank together with the compressed air, wherein a usual coating material or mortar or the like is sprayed on a working surface, as the spraying material (refer to Patent Documents 2 and 3). However, there has been only a few proposals of spraying apparatus using the sulfur-solidified material as the spraying material.
Patent document 1: Japanese Laid-Open (Kokai) Patent Application Publication No. 2004-160693
Patent document 2: Japanese Laid-Open (Kokai) Patent Application Publication No. 2001-38254
Patent document 3: Japanese Laid-Open (Kokai) Patent Application Publication No. 2003-206632

### Disclosure of the Invention

### Problems to be solved by the Invention

However, in the case of the spraying apparatus using the sulfur-solidified material as the spraying material, the melted sulfur-solidified material is hardened in a short time. Therefore, when a tank which is provided with no heating or heat retaining means is used, since the sulfur-solidified material is hardened in the spray nozzle when it is sprayed on the working surface or is hardened at an end portion of the periphery of the tank, it becomes impossible to spray all of the sulfur-solidified material contained in the tank. In such a case, it becomes necessary to perform extra works, such as letting again the hardened sulfur-solidified material in a heater to melt it, peeling off the hardened sulfur-solidified material from a tank inner wall by beating a tank outer wall or the like. Consequently, it is impossible to consecutively spray the melted sulfur-solidified material on the working surface.

In view of the above problems, the present invention has an object to provide a sulfur material spraying apparatus capable of consecutively spraying on a working surface, a spraying material comprised of a sulfur material which remains solid at room temperature while it is melted to become a fluid state upon being heated to a temperature within a preset temperature range of which a lower limit is equal to or above a melting point of the sulfur material.

### Means for Solving the Problems

In order to achieve the above object, a sulfur material spraying apparatus according to the present invention comprises: a material tank which contains therein a melted sulfur material as a spraying material; a warming heater which is made temperature-adjustable so as to heat an outer peripheral portion of the material tank to have a temperature within a preset temperature range of which a lower limit is set to be equal to or above the sulfur melting point and to retain the sulfur material in the tank in a melted state; a spray nozzle which is integrally mounted on the material tank while being connected to a material outlet port on a lower end portion of the material tank and is supplied with the compressed air, to inject the sulfur material in the material tank together with the compressed air, the sulfur material in the melted state being sprayed on a working surface.

According to the above configuration, once the melted sulfur material is contained in the material tank as the spraying material, the outer peripheral portion of the material tank is heated to have a temperature within the preset temperature range of which a lower limit is set to be equal to or above the sulfur melting point to retain the sulfur material in the material tank in the melted state, and by the spray nozzle which is integrally mounted on the material tank while being connected to the material outlet port on the lower end portion of the material tank and is supplied with the compressed air, the melted state sulfur material in the material tank is injected together with the compressed air to be sprayed on the working surface.

Further, in the material tank, there is provided temperature detecting means for detecting the temperature of the melted state sulfur material contained therein. As a result, by the temperature detecting means disposed in the material tank, the temperature of the melted state sulfur material contained therein is detected.

Furthermore, on the material outlet port on the lower end portion of the material tank, there is provided an on-off valve for the sulfur material outflow. As a result, an outflow amount of the sulfur material is controlled by means of the on-off valve disposed on the material outlet port on the lower end portion of the material tank.

Still further, in the vicinity of an inlet port for the compressed air of the spray nozzle, there is provided a flow control valve for the compressed air. As a result, the flow amount of the compressed air to be supplied to the spray nozzle is controlled by the flow control valve disposed in the vicinity of the inlet port for the compressed air of the spray nozzle.

Moreover, an injection port portion of the spray nozzle is made detachable and exchangeable. As a result, the injection port portion of the spray nozzle may be exchanged to another specified one.

Furthermore, on the way of a passageway through which the compressed air is supplied to the spray nozzle, there is provided an air warming heater for heating the compressed air to the predetermined temperature. As a result, the compressed air to be supplied to the spray nozzle is heated to the predetermined temperature by the air warming heater disposed on the way of the passageway through which the compressed air is supplied to the spray nozzle.

Still further, to piping of the passageway through which the compressed air is supplied from the air warming heater to the spray nozzle, there is disposed heating means for heating the compressed air to the predetermined temperature. As a result, the compressed air to be supplied to the spray nozzle is heated to the predetermined temperature by the heating means disposed to the piping of the passageway through which the compressed air is supplied from the air warming heater to the spray nozzle.

### Effect of the Invention

According to the present invention as claimed in claim 1, the outer peripheral portion of the material tank is heated to have a temperature within the preset temperature range of which a lower limit is set to be equal to or above the sulfur melting point using a heater capable of adjusting the heating temperature thereof to retain the sulfur material in the material tank in the melted state. Accordingly, it is possible to consecutively spray on the working surface, the sulfur material which remains solid at room temperature while it is melted to become a fluid state upon being heated to a temperature within a preset temperature range of which a lower limit is set to be equal to or above the sulfur melting point, as the spraying material. Further, since the spray nozzle is integrally mounted to the material tank while being connected to the material outlet port on the lower end portion of the material tank, the reduction in size and weight of the entire spraying apparatus can be achieved. As a result, it becomes possible for a single worker to work in a narrow site while holding the spraying apparatus in his/her hand.

Further, according to the present invention as claimed in claim 2, by the temperature detecting means disposed in the material tank, the temperature of the melted state sulfur material contained therein is detected, so that it is possible to enable the temperature adjustment of the warming heater. Accordingly, it is possible to heat the sulfur material contained in the material tank to the setting temperature range which is set to be equal to or higher than the sulfur melting point, to retain the sulfur material in the melted state.

Furthermore, according to the present invention as claimed in claim 3, an outflow amount of the sulfur material is controlled by means of the on-off valve disposed on the material outlet port on the lower end portion of the material tank. Consequently, it is possible to appropriately adjust a spray amount of the sulfur material on the working surface.

Still further, according the present invention as claimed in claim 4, the flow amount of the compressed air to be supplied to the spray nozzle is controlled by the flow control valve disposed in the vicinity of the inlet port for the compressed air of the spray nozzle. Consequently, it is possible to appropriately control the spray pressure of the sulfur material on the working surface.

Moreover, according to the present invention as claimed in claim 5, the injection port portion of the spray nozzle may be exchanged to another specified one. Consequently, it is possible to modify a nozzle diameter of the injection port portion, to thereby adjust the spray density of the sulfur material according to spraying objects. Further, it is also possible to modify a shape of the injection port portion, to thereby spray the sulfur material on a wall surface, a floor and the like by means of a linear nozzle, or on a ceiling surface by an upward nozzle.

Furthermore, according to the present invention as claimed in claim 6, the compressed air to be supplied to the spray nozzle is heated to the predetermined temperature by the air warming heater disposed on the way of the passageway through which the compressed air is supplied to the spray nozzle. Consequently, it is possible to prevent the melted state sulfur material from being hardened at the spray nozzle portion.

Still further, according to the present invention as claimed in claim 7, the compressed air to be supplied to the spray nozzle is heated to the predetermined temperature by the heating means disposed to the piping of the passageway through which the compressed air is supplied from the air warming heater to the spray nozzle. Consequently, it is possible to further prevent the melted state sulfur material from being hardened at the spray nozzle portion.

### Brief Description of the Drawings

Fig. 1 is a schematic diagram showing an embodiment of a sulfur material spraying apparatus according to the present invention;
Fig. 2 is an exploded perspective view showing a first embodiment of a material tank and a spray nozzle in the spraying apparatus;
Fig. 3 is a perspective view showing a warming heater in the spraying apparatus;
Fig. 4 is a side view showing the warming heater in the spraying apparatus; and
Fig. 5 is an exploded perspective view showing a second embodiment of the material tank and the spray nozzle in the spraying apparatus.

### Explanation of Reference Symbols

- 1: Material tank
- 2: Warming heater
- 3: Spray nozzle
- 3a: Nozzle body portion
- 3b: Injection port portion
- 4: On-off valve
- 6: Operating lever
- 7: Lever rod
- 8: Handle
- 9: Temperature controller
- 10: Temperature sensor
- 12: Air compressor
- 13a, 13b: Air hose
- 15: Flow control valve
- 16: Cock handle
- 18: Air warming heater

### Best Mode for Carrying Out the Invention

Hereunder, embodiments of the present invention will be described in detail based on the appended drawings.

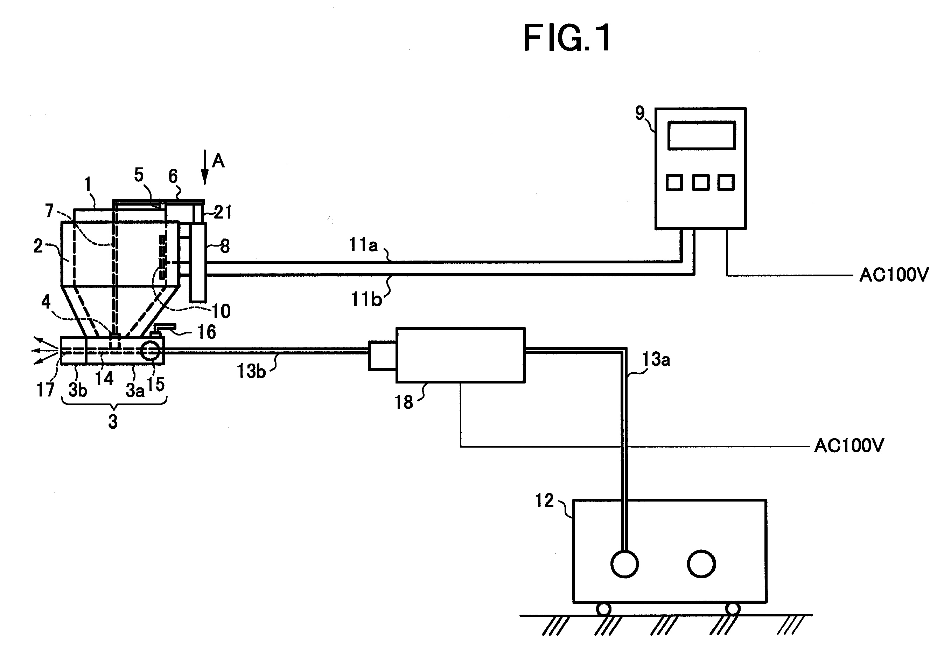

Figure 1 is a schematic diagram showing an embodiment of a sulfur material spraying apparatus according to the present invention. This sulfur material spraying apparatus capable of consecutively spraying on a working surface, as a spraying material, a sulfur material which remains solid at room temperature while it is melted to become a fluid state upon being heated to a temperature within a preset temperature range of which a lower limit is set to be equal to or above a melting point of the sulfur material, is provided with a material tank 1, a warming heater 2, and a spray nozzle 3.

The material tank 1 is for containing therein the melted sulfur material serving as the spraying material, and is formed of a metal, for example, stainless steel or the like, in a hopper shape having a predetermined volumetric capacity (for example, 1.5 to 5 lit.), in which a lower end portion thereof becomes thinner. The sulfur material serving as the spraying material is called a sulfur-solidified material which is produced such that, by utilizing the properties of sulfur which is solid at the room temperature while it is melted at about 119°C to 159°C, aggregate and sand, coal ash and the like are mixed in the sulfur which has been heated within a setting temperature range equal to or higher than 119°C to be melted, and the mixture is kneaded while retaining the temperature of about 119°C to 159°C, and thereafter, is cooled to be hardened. Alternatively, the sulfur material is called a modified sulfur-solidified material which is produced such that the sulfur which has been heated to be melted similarly to the above and a sulfur modifying agent for denaturing the melted sulfur are mixed with each other, to thereby produce modified sulfur, and then, aggregate and sand, coal ash and the like are mixed in the modified sulfur, and the mixture is kneaded while being heated similarly to the above, and thereafter, is cooled to be hardened. In the following description, such a sulfur-solidified material or a modified sulfur-solidified material is heated, to be used as the melted state sulfur material.

Incidentally, the sulfur material serving as the spraying material may be pure sulfur. However, it is desirable to use a simple substance of modified sulfur produced such that olefinic hydrocarbon(s) is added to the pure sulfur, or the mixture of the modified sulfur and a mineral additive. By using such a material, a coating of the sulfur-solidified material or the modified sulfur-solidified material has the good water-shielding property, the good acid-proof property and the good alkali-proof property, and further, has the sufficiently high adhesion strength to concrete, and therefore, becomes a sufficiently usable one as an anticorrosive material coating.

In Fig. 1, on a material outlet port on a lower end portion in the material tank 1, an on-off valve 4 is disposed. This on-off valve 4 is for controlling an outflow amount of the sulfur material which is flown out from the material outlet port on the lower end portion of the material tank 1, and is mounted to a tip end of a lever rod 7. The lever rod 7 is rotatably supported by a supporting member 5 disposed on an upper edge end portion of the material tank 1, and is connected to a tip end portion of an operating lever 6 mounted in substantially parallel to an upper surface portion of the material tank 1, to extend downward into the material tank 1. Then, when a base end portion of the operating lever 6 is pushed down in an arrow A direction, the on-off valve 4 is lifted up via the lever rod 7, so that the material outlet port on the lower end portion of the material tank 1 is opened. Note: in Fig. 1, numeral 8 designates a handle of the material tank 1.

The warming heater 2 is wound around an entire outer peripheral portion of the material tank 1. This warming heater 2 is for heating the outer peripheral portion of the material tank 1 to a temperature within a setting temperature range, which is set to be equal to or higher than the sulfur melting point (119°C) to retain the sulfur material in the material tank 1 in a melted state, and is provided with an electric wire heater for example, so that the temperature for heating the outer peripheral portion of the material tank 1 by a temperature controller 9 is made adjustable. At this time, the sulfur material contained in the material tank 1 may be heated to be melted from the solid state to the fluid state, or the sulfur material which has been previously heated to be melted by a separate heating tank or the like to be contained in the material tank 1, may be held in the fluid state. The setting temperature of the temperature controller 9 is set at 140°C to 150°C for example.

Incidentally, in the material tank 1, a temperature sensor (temperature detecting means) 10 for detecting the temperature of the melted state sulfur material contained in the material tank 1 is disposed in a vertical direction, and a detection signal from this temperature sensor 10 is sent to the temperature controller 9 by which the temperature of the sulfur material is controlled to be at the setting temperature. Note: in Fig. 1, numeral 11a indicates a signal line for sending the detection signal from the temperature sensor 10 to the temperature controller 9, and numeral 11 b indicates a control line for sending a heating control signal from the temperature controller 9 to the warming heater 2.

On the lower end portion of the material tank 1, the spray nozzle 3 is attached. This spray nozzle 3 which is supplied with the compressed air from an external air compressor 12 to inject the sulfur material in the material tank 1 together with the compressed air comprised of a nozzle body portion 3a and an injection port portion 3b. The nozzle body portion 3a is integrally mounted on the material tank 1 while being connected to the material outlet port on the lower end portion of the material tank 1, and at a center axis portion thereof, there is formed an air flow passage 14 communicated with air hoses (piping) 13a and 13b which extend from the air compressor 12. Further, in the vicinity of an inlet port for the compressed air of the nozzle body portion 3a, a flow control valve 15 for the compressed air is disposed to be operated to open/close by a cock handle 16 disposed on an upper surface of the nozzle body portion 3a.

The injection port portion 3b is disposed to be detachable at a tip end portion of the nozzle body portion 3a, and at a center axis portion thereof, there is disposed an injection hole 17 communicated with the air flow passage 14 of the nozzle body portion 3a. As a result, when the cock handle 16 is opened and also the on-off valve 4 is opened, the melted state sulfur material being flown downward from the material tank 1 is suctioned due to a negative pressure generated in a material outlet port 23 by the compressed air being flown in the spray nozzle 3, to be injected. Note, the injection port portion 3b is made detachable and exchangeable. Further, the air compressor 12 is of a gasoline engine driven system for example, and a spraying pressure by an operation thereof is made variable, for example, 5 through 7kg/cm².

On the way of a passageway through which the compressed air is supplied to the spray nozzle 3 from the air compressor 12, there is disposed an air warming heater 18. This air warming heater 18 is for heating the compressed air which is to be supplied to the spray nozzle 3 from the air compressor 12, to the predetermined temperature, and is provided with an electric wire heater for example, so that the temperature for heating the compressed air can be appropriately set. For example, the compressed air is heated from the room temperature (or ordinary temperature) at the time to the temperature of about the sulfur melting point.

Further, to the air hose 13b of the passageway through which the compressed air is supplied to the spray nozzle 3 from the air warming heater 18, there is disposed heating means for heating the compressed air to the predetermined temperature. This heating means may be formed such that an electric wire heater is embedded in a material thickness portion of the air hose 13b. Also in this case, the compressed air passing through the air hose 13b may be heated to about the temperature around the sulfur melting point for example.

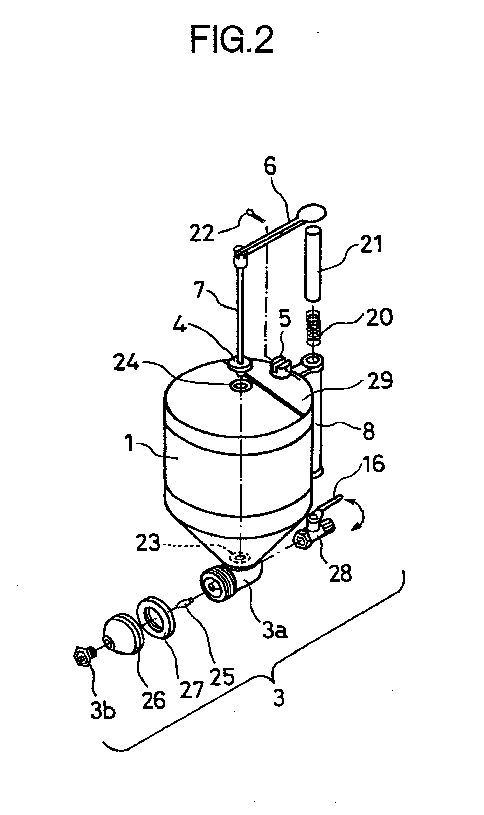

Next, there will be described specific structures of the material tank 1 and the spray nozzle 3, and the warming heater 2, referring to Fig. 2 through Fig. 4. Fig. 2 is an exploded perspective view showing a first embodiment of the material tank 1 and the spray nozzle 3. In Fig. 2, the material tank 1 is produced using a metal such as stainless steel or the like, and has a cylindrical shape at an upper portion thereof and a conical shape at a lower portion thereof, to be formed in a hopper shape as a whole. Further, on one of outer side faces, an elongated cylindrical handle 8 is attached in a vertical direction. In a cylindrical inside of the handle 8, a spring case 21 into which a spring 20 is inserted is telescopically incorporated, and a head portion of the spring case 21 protrudes from an upper end of the handle 8 by a spring force of the spring 20.

On the upper edge end portion of the material tank 1 in the vicinity of the handle 8, the supporting member 5 is disposed, and the operating lever 6 is mounted in substantially parallel to the upper surface portion of the material tank 1 by utilizing this supporting member 5. At this time, an approximate center portion of the operating lever 6 is fitted in a groove of the supporting member 5, and a split pin 22 is inserted through the operating lever 6 and the supporting member 5, so that the operating lever 6 is supported swingably by the supporting member 5 with the split pin 22 as a supporting axis. Further, to the tip end portion of the operating lever 6, the lever rod 7 is connected to extend downward into the material tank 1, and on the tip end of the lever rod 7, the on-off valve 4 is disposed. The on-off valve 4 is in contact with a valve packing 24 mounted to the material outlet port 23 on the lower end portion in the material tank 1, to open/close the material outlet port 23.

Under the above state, a lower surface of the base end portion of the operating lever 6 is pushed up by the head portion of the spring case 21, which protrudes by the spring force of the spring 20, while the tip end portion of the operating lever 6 being pushed downward with the split pin 22 as the supporting axis, so that the on-off valve 4 on the tip end of the lever rod 7 is in contact with the valve packing 24 mounted to the material outlet port 23. Accordingly, as shown in Fig. 1, by pushing down the base end portion of the operating lever 6 in the arrow "A" direction, the on-off valve 4 is lifted up via the lever rod 7, so that the material outlet port 23 on the lower end portion of the material tank 1 is opened.

Further, the nozzle body portion 3a of the spray nozzle 3 is integrally mounted to the material tank to be communicated with the material outlet port 23 on the lower end portion of the material tank 1. Then, to the inside of this nozzle body portion 3a, an air core 25 which is exchanged for adjusting an air flow amount is incorporated, and to a tip end side thereof (the left hand in Fig. 2), a base cap 26 is mounted by means of a locknut 27, and further, to a tip end of the base cap 26, the injection port portion 3b is detachably mounted. To an inlet port side of the compressed air at a base end portion (the right hand in Fig. 2) of the nozzle body portion 3a, a cock portion 28 incorporating therein the flow control valve 15 shown in Fig. 1 is connected, so that the flow control valve 15 is operated to open/close with the cock handle 16 disposed on an upper surface of the cock portion 28. Note: in Fig. 2, numeral 29 indicates a semilunar lid for covering a handle 8 side of an upper end opening portion of the material tank 1.

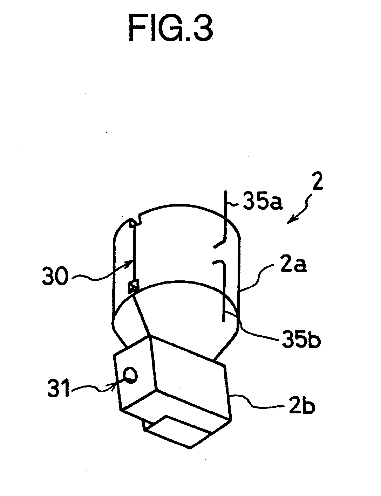

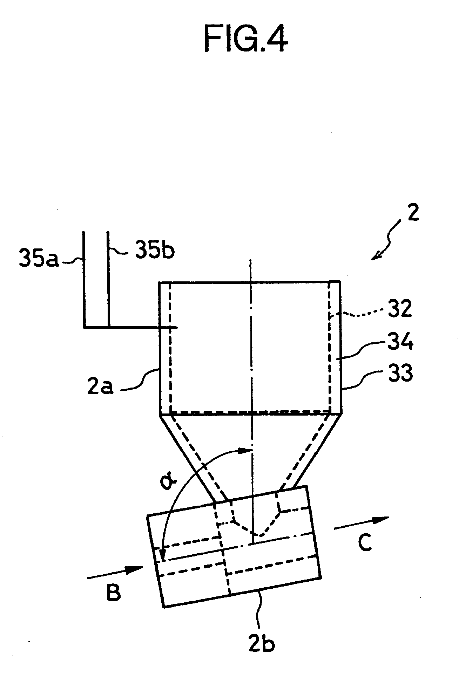

Figure 3 is a perspective view and Fig. 4 is a side view, each showing the warming heater 2. The warming heater 2, which is called a rubber heater covers the entire outer side of both the material tank 1 and the spray nozzle 3 as shown in Fig. 2. The warming heater 2 performs heating and heat-retention of the material tank 1 and the spray nozzle 3, and as shown in Fig. 3, is comprised of a covering portion 2a for the material tank 1 and a covering portion 2b for the spray nozzle 3. Further, a cutting line 30 is made on a part of the covering portion 2a, and also, a cutting line 31 is made on a part of the covering portion 2b, so that the covering portions 2a and 2b are opened up utilizing these cutting lines 30 and 31 to be overlaid on the outer sides of the material tank 1 and the spray nozzle 3.

As shown in Fig. 4, the covering portion 2a for the material tank 1 is provided with: an interior material 32; a covering material 33; and a heat insulating material 34 arranged between the interior material 32 and the covering material 33, and to the inside of this heat insulating material 34, an electric wire heater is embedded in a coil shape for example, so that the electric power is supplied via lead wires 35a and 35b drawn out from end portions of the electric wire heater. Incidentally, each of a lower portion of the covering portion 2a for the material tank 1 and the covering portion 2b for the spray nozzle 3 is not embedded with the electric wire heater and is heat retained by the heat insulating material 34. However, each of these portions may be heated by embedding the electric wire heater.

In Fig. 4, in the covering portion 2b for the spray nozzle 3, the compressed air is sent from the left hand in the figure in an arrow B direction so that the sulfur material is injected from the injection port portion 3b on the right hand in the figure in an arrow "C" direction. At this time, a longitudinal axis of the covering portion 2b has an intersection angle □ of approximately 100° for example to a vertical axis of the material tank 1, so that an injection port portion 3b side is made slightly upward.

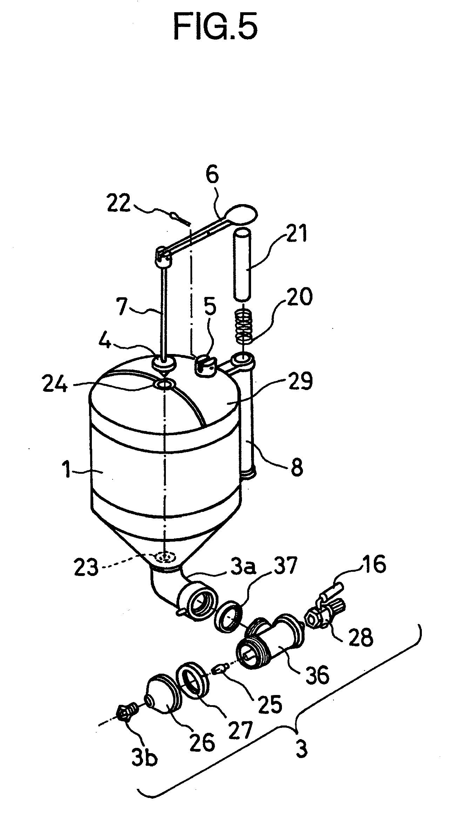

Figure 5 is an exploded perspective view showing a second embodiment of the material tank 1 and the spray nozzle 3. This second embodiment is basically same as the first embodiment shown in Fig. 2, but differs from the first embodiment in that a spraying direction of the sulfur material from the spray nozzle 3 is made variable upward in the second embodiment, while the spray direction in the first embodiment being fixed. Namely, in Fig. 5, a T-type pipe fitting 36 extending to a direction orthogonal to the nozzle body portion 3a mounted to be communicated to the material outlet port 23 on the lower end portion of the material tank 1, is rotatably mounted to the nozzle body portion 3a via a packing material 37. Then, to the inside of the T-type pipe fitting 36, the air core 25 is incorporated, and to a tip end side thereof (the left hand in Fig. 2), the base cap 26 is mounted by means of the locknut 27, and further, to the tip end of the base cap 26, the injection port portion 3b is detachably mounted.

To the inlet port side of the compressed air at a base end portion (the right hand in Fig. 5) of the T-type pipe fitting 36, the cock portion 28 incorporating therein the flow control valve 15 (refer to Fig. 1) is connected, so that the flow control valve 15 is operated to open/close with the cock handle 16. As a result, it is possible to rotate the T-type pipe fitting 36 by hand, to change the spray direction of the sulfur material from the spray nozzle 3 upward by an appropriate angle. In this case, by the spray nozzle 3, the sulfur material can be sprayed not only on a wall surface, a floor and the like, but also on a ceiling surface by making the spray direction upward.

Next, there will be described the use of the sulfur material spraying apparatus having the above configuration. In Fig. 1, the temperature controller 9 is firstly turned on, to thereby operate the warming heater 2 so that the material tank 1 is made in the heated state, and also, the air compressor 12 is operated so that the compressed air is made in the supplied state to the spray nozzle 3. Then, an operator holds the handle 8 of the material tank 1 in his/her hand, to add, into the material tank 1, the sulfur material which has been previously heated and melted by the separate heating tank or the like to become in the fluid state, by an appropriate amount. At this time, the cock handle 16 of the spray nozzle 3 is still in a closed state. Incidentally, the air warming heater 18 disposed between the air hoses 13a and 13b from the air compressor 12 may be turned on if required, and also, the heating means disposed to the air hose 13b connected to the spray nozzle 3 may be turned on if required.

Next, the cock handle 16 is operated to rotate in the arrow direction shown in Fig. 2, to thereby open the flow control valve 15, and the operator pushes down the base end portion of the operating lever 6 while holding the handle 8 of the material tank 1. As a result, the operating lever 6 is swung with the supporting member 5 as a supporting point, and the lever rod 7 connected to the tip end portion of the operating lever 6 rises, and the on-off valve 4 disposed on the tip end of the lever rod 7 is lifted up, so that the material outlet port 23 on the lower end portion of the material tank 1 is opened.

Thus, the melted state sulfur material flowing down from the material outlet port 23 of the material tank 1 is suctioned due to the negative pressure generated in the material outlet port 23 by the compressed air that flows inside the spray nozzle 3, to be eventually injected. Hence, the above-mentioned melted state sulfur material can be sprayed on a working surface. Then, in order to stop the spraying of the sulfur material, the push down of the operating lever 6 in the arrow "A" direction may be released, so that the head portion of the spring case 21 swings the operating lever 6 in an opposite direction by the spring force of the spring 20 shown in Fig. 2, to thereby close the material outlet port 23 on the lower end portion of the material tank 1 by means of the on-off valve 4 on the tip end of the lever rod 7. Thereafter, the cock handle 16 is closed.

In the above description, the warming heater 2 is wound around the entire outer peripheral portion of the material tank 1. However, the present invention is not limited thereto, and the electric wire heater may be embedded in the material thickness portion constituting the material tank 1 in an insulated state. Further, in Fig. 1, the air warming heater 18 is disposed between the air hoses 13a and 13b from the air compressor 12, and the heating means is disposed to the air hose 13b connected to the spray nozzle 3. However, the present invention is not limited thereto, and the heating means is not necessarily disposed to the air hose 13b. Furthermore, the air warming heater 18 is not necessarily disposed between the air hoses 13a and 13b.

## Claims

1. A sulfur material spraying apparatus comprising:
a material tank which contains therein a melted sulfur material as a spraying material;
a warming heater which is made temperature-adjustable so as to heat an outer peripheral portion of the material tank to a temperature within a preset temperature range of which a lower limit is set to be equal to or above a sulfur melting point and to retain the sulfur material in the material tank in a melted state; and
a spray nozzle which is integrally mounted on the material tank while being connected to a material outlet port on a lower end portion of the material tank and is supplied with the compressed air, to inject the sulfur material in the material tank together with the compressed air, the sulfur material in the melted state being sprayed on a working surface.

2. The apparatus according to claim 1, wherein the material tank is provided therein with a temperature detecting unit that detects the temperature of the melted state sulfur material contained therein.

3. The apparatus according to claim 1, wherein the material tank is provided, at the material outlet port on the lower end portion thereof, with an on-off valve capable of permitting the sulfur material to outflow.

4. The apparatus according to claim 1, wherein a flow control valve for the compressed air is provided in the vicinity of a compressed-air inlet port of the spray nozzle.

5. The apparatus according to claim 1, wherein the spray nozzle has an injection port portion, which is made detachable and exchangeable.

6. The apparatus according to claim 1, wherein an air warming heater is provided on the way of a passageway through which the compressed air is supplied to the spray nozzle, the warming heater heating the compressed air to a predetermined temperature.

7. The apparatus according to claim 6, wherein a heating unit is disposed on piping for forming the passageway through which the compressed air is supplied from the air warming heater to the spray nozzle, the heating unit heating the compressed air to the predetermined temperature.
